# EUROPÄISCHE PATENTSCHRIFT

(11) **EP 1 138 270 B1**
(45) Veröffentlichungstag und Bekanntmachung des Hinweises auf die Patenterteilung: **25.05.2005**
(21) Anmeldenummer: 01108124.7
(22) Anmeldetag: 30.03.2001
(51) Int. Cl.: A61C 1/08

(54) **Halter für Leuchtmittel in zahnärztlichen Instrumenten und/oder deren Komponenten**
Holder for illumination means in dental instruments and/or their components
Support pour moyens d'éclairage pour instruments dentaires et/ou leurs composants

(30) Priorität: 30.03.2000 DE 10015488
(43) Veröffentlichungstag der Anmeldung: 04.10.2001
(73) Patentinhaber: Sirona Dental Systems GmbH, 64625 Bensheim (DE)
(72) Erfinder: Stein, Ulf, 64689 Grasellenbach (DE)
(74) Vertreter: Sommer, Peter

(56) Entgegenhaltungen:
- DE-A- 3 706 943
- US-A- 4 655 709
- US-A- 4 725 231

## Beschreibung

Die Erfindung bezieht sich auf einen Halter für Leuchtmittel entsprechend dem Oberbegriff des Patentanspruches 1.

Unter Leuchtmittel werden im folgenden Kleinstglühlampen, Miniaturhalogenlampen, LEDs, oder dgl. verstanden, die zum Ausleuchten der Mundhöhle eines Patienten an geeigneter Stelle in einem Instrument oder einer Komponente des Instruments, z.B. in einer Instrumentenkupplung oder in einem Antriebsmotor angeordnet sind, und zwar so, dass sie entweder direkt, oder indirekt über einen Lichtleiter, das Arbeitsfeld ausleuchten.

Die Halterung solcher Leuchtmittel erfolgte bisher durch Steckfassungen aus Hartkunststoff oder mit Hilfe von Steckstiften, oder, indem man auf einer Leiterplatte federnde Kontaktelemente aufgelötet hat, die einerseits das Leuchtmittel auswechselbar festhalten und andererseits den Kontakt zu den mit den Zuleitungen verbindbaren Kontaktleitungen herstellen.Derartige Anordnungen sind in der DE 195 48 444 C1 und in der DE 295 20 454.0 offenbart.

Das Dokument US 4 655 709 offenbart einen Halter nach dem Oberbegriff von Anspruch 1.

Nachteilig bei den bekannten Ausführungen ist, dass eine Vielzahl von relativ kleinen Bauteilen erforderlich ist, demnach auch viele Einzelteile zu montieren sind, und dass infolge der Kleinheit der Teile bei den Federelementen relativ kurze Federwege vorhanden sind. Weiterhin nachteilig ist, dass keine ausreichende Kontaktsicherheit, vor allen Dingen nicht unter dem Aspekt einer Desinfektion oder Sterilisation der Bauteile gegeben ist.

Der im Patentanspruch 1 angegeben Erfindung liegt die Aufgabe zugrunde, demgegenüber eine Verbesserung zu erzielen, insbesondere einen Halter der eingangs genannten Art anzugeben, der einfacher aufgebaut ist, eine gute elektrische Isolierung und Abdichtung der Leitungen gewährleistet, und mit dem die Kontaktsicherheit sowie die Sterilisierbarkeit und Montage verbessert wird.

Der erfindungsgemäß vorgeschlagene Halter ist, da er mit weniger Bauteilen auskommt, einfacher aufgebaut und bietet eine sichere mechanische und elektrische Aufnahme des Leuchtmittels. Durch die Elastizität des Haltermaterials wird nicht nur eine gleichbleibend gute Kontaktierung erreicht, sondern gleichsam auch eine Möglichkeit geschaffen, die Kontaktleitungen gegen Eindringen von Feuchtigkeit und dgl. abzudichten. Ein weiterer, wesentlicher Vorteil ist darin zu sehen, dass mit dem Halter auch eine Abdichtung nach außen, also gegenüber benachbarten Gehäuseteilen erreicht werden kann. So ist es möglich, mit dem Halter benachbart angeordnete Funktionsräume oder Kanäle, die beispielsweise zum Durchleiten von Medien dienen, nach außen hin abzudichten.

Vorteilhaft ist es, wenn der Halter aus einem Elastomer gebildet ist, in dem die Kontaktleitungen eingebettet sind.

Die Kontaktierung wird noch weiter verbessert, wenn, wie gemäß einer weiteren vorteilhaften Ausgestaltung der Erfindung vorgeschlagen wird, die Kontaktleitungen im Halter so eingebracht sind, dass bei eingesetztem Leuchtmittel die Kontaktflächen der Leitungen mit einer definierten Vorspannung an dem Leuchtmittel anliegen und wenn zumindest die Kontaktflächen an den Enden der Leitungen vergoldet ausgeführt sind.

Dadurch, dass die Leitungen bis auf die Kontaktstellen in einem elastischen, insbesondere aber elastomeren Formstück eingebettet sind, sind die Leitungen 'bedämpft', so dass bei evtl. auftretenden Schwingungen die Bruchgefahr gemindert wird, die insbesondere bei sehr dünnen Leitungen gegeben ist.

Die Verwendung eines Elastomers als Werkstoff für den Halter hat auch noch den weiteren Vorteil, dass die im Spritzverfahren hergestellten Halter praktisch in jeder beliebigen Form erstellt werden können, insbesondere lassen sich die Halter sehr leicht den Instrumentenkonturen anpassen.

Durch die dichtende Wirkung des Elastomers wird, wie bereits angesprochen, eine Abdichtung einerseits nach innen gegen Eindringen von Luft, Feuchtigkeit, Pflege- und Reinigungsmittel, andererseits nach außen gegenüber benachbarten Gehäuseteilen erzielt.

Vorteilhafterweise ist die Formausnehmung des Halters zur Aufnahme des Leuchtmittels elastisch verformbar. Dabei kann insbesondere eine reibschlüssige Verbindung ausgebildet werden. Dadurch wird das Leuchtmittel gegenüber dem Halter abgedichtet und mechanisch gehalten.

Anhand der Zeichnung wird ein Ausführungsbeispiel der Erfindung näher erläutert. Es zeigen:
Figur 1 den erfindungsgemäßen Halters in einen Antriebsmotor eines zahnärztlichen Instruments eingebaut,
Figur 2 den Halter in der Draufsicht,
Figur 3 den Halter in einer Frontansicht,
Figur 4 den Halter im Schnitt, entlang der Linie IV/IV in Figur 2,
Figur 5 den Halter im Schnitt, entlang der Linie V/V in Figur 2,
Figur 6 den Halter im Schnitt, entlang der Linie VI/VI in Figur 2.

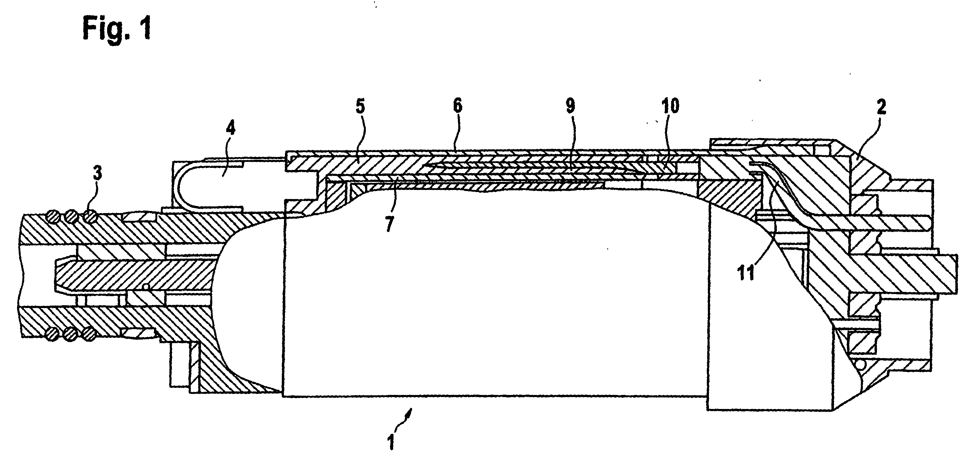

Die Figur 1 zeigt, teilweise im Schnitt, einen zahnärztlichen Antriebsmotor 1 mit einem Anschlußteil 2, an den in bekannter Weise ein Versorgungsschlauch anschließbar ist, über den diverse Medien wie Luft, Wasser und elektrischer Strom herangeführt werden. Der Antriebsmotor 1 ist auf der gegenüberliegenden Seite mit einem Kupplungszapfen 3 versehen, auf den ein nicht dargestelltes Handstück aufsetzbar ist. Die am Handstück benötigten Medien Luft und Wasser werden in bekannter Weise durch den Antriebsmotor zum Handstück geleitet.

Das am Handstück zum Ausleuchten der Mundhöhle benötigte Licht wird von einer Miniaturglühlampe 4 in einen im Handstück angeordneten Lichtleiter eingespeist. Die Miniaturglühlampe 4 ist in einem Halter 5 eingesteckt, der in einem zwischen einer äußeren Hülse 6 und einer inneren Hülse 7 vorhandenen Raum herausnehmbar angeordnet ist.

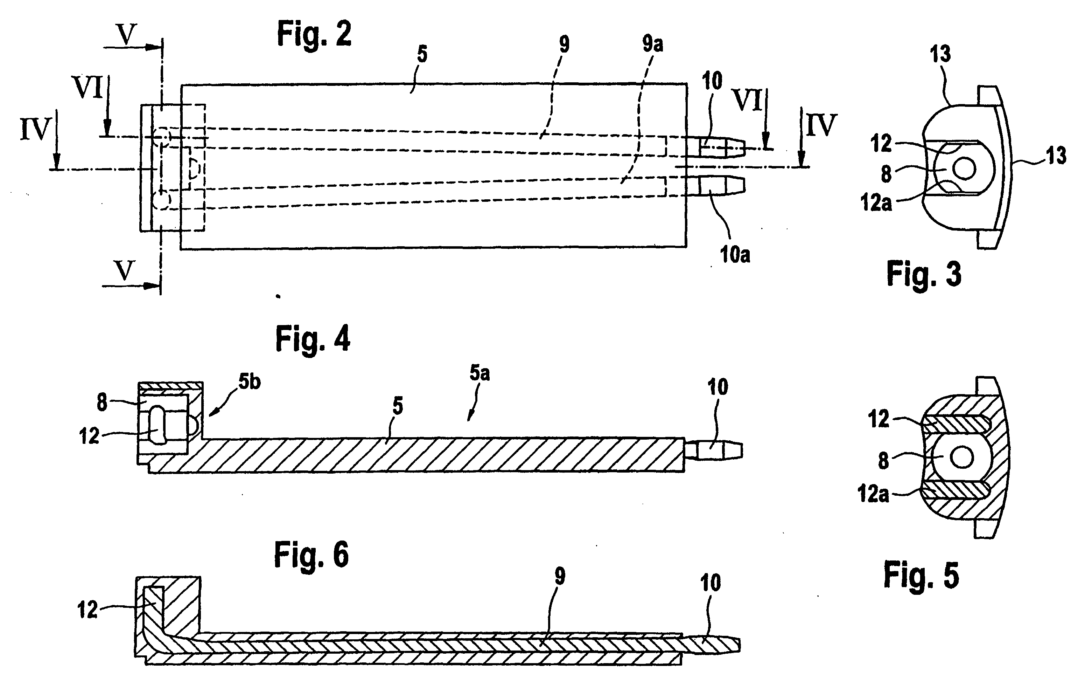

Die Form des Halters 5 ist aus den Figuren 2 bis 6 ersichtlich. Der Halter weist einen geraden, flachen Abschnitt 5a auf, der in einen abgewinkelten Abschnitt 5b übergeht. Zur Platzeinsparung sind die Kontaktleitungen 9, 9a, im flachen Abschnitt 5a flach gedrückt angeordnet. Im abgewinkelten Abschnitt 5b befindet sich stirnseitig eine Formausnehmung 8 zur Aufnahme der Miniaturglühlampe 4.

Im Halter 5 sind, wie nachfolgend noch näher erläutert, zwei Kontaktleitungen 9, 9a eingebettet, deren dem Anschlußteil 2 zugewandte Leitungsenden 10, 10a, als Stecker ausgeführt sind, die in nicht näher bezeichnete Buchsen der Zuleitungen 11, 11a eingreifen (Figur 1). Die Steckverbindung kann an dieser Stelle selbstverständlich auch umgekehrt ausgeführt sein.

Aus Figur 2, die den Halter 5 in der Draufsicht zeigt ist erkennbar, dass die beiden Kontaktleitungen 9, 9a im Halter 4 nicht parallel, sondern von den Leitungsenden 10, 10a, aus divergierend verlegt sind.

Die Kontaktleitungen 9, 9a sind im Abschnitt 5a abgewinkelt angeordnet und zwar so, dass die Enden 12, 12a, nur teilweise, d.h. soweit sie zur Kontaktierung erforderlich sind, in die Formausnehmung 8 ragen (siehe Figuren 3 bis 5). Der Abstand der beiden Enden 12, 12a ist dabei so bemessen, dass die Lampe im eingesetzten Zustand mit einer bestimmten Vorspannung gehalten wird. Dadurch, dass die Enden bis auf den zur Kontaktierung notwendigen Längenabschnitt im verwendeten Material eingegossen sind, sich also nicht frei federnd bewegen können, bleibt die Vorspannung erhalten. Darüber hinaus trägt auch die Elastizität der Formausnehmung zur Halterung der Lampe bei.

Der Halter wird im Spritzverfahren aus einem elastischen Material hergestellt. Als besonders vorteilhaft haben sich Elastomere, z.B. ein nicht zu weiches Silikonmaterial erwiesen. Die Elastizität solcher Elastomere ist einerseits ausreichend für eine dauerhaft gute Halterung der Lampe, andererseits wird mit einem solchen Material die erwähnte Abdichtung der im Halter eingebetteten Kontaktleitungen 9, 9a und auch des Halters gegenüber den Gehäuseteilen, in denen er eingesetzt ist, erzielt.

In Betrachtung der Figuren 1 und 3 ist zu erkennen, dass der in Figur 3 mit 13 bezeichnete Dichtrand den Halter gegenüber den Hülsen 6 und 7 abdichtet. Dabei erfolgt die Abdichtung durch Verdrängung des elastomeren Materials.

Von besonderem Vorteil ist die Verwendung eines sterilisationsbeständigen Silikonmaterials, also eines temperaturbeständigen und hydrolysebeständigem Material. Weiterhin vorteilhaft ist es, wenn das Material eine hohe Reißfestigkeit aufweist, da dann mechanische Spannungen gut ertragen werden.

### Bezugszeichenliste

- 1 =: Antriebsmotor
- 2 =: Anschlußteil
- 3 =: Kupplungszapfen
- 4 =: Miniaturglühlampe
- 5 =: Halter
- 5a =: flacher Abschnitt
- 5b =: abgewinkelter Abschnitt
- 6 =: äußere Hülse
- 7 =: innere Hülse
- 8 =: Formausnehmung
- 9 =: Kontaktleitung
- 9a =: Kontaktleitung
- 10 =: Leitungsende
- 10a: = Leitungsende
- 11 =: Zuleitung
- 11a: = Zuleitung
- 12 =: Leitungsende
- 12a =: Leitungsende
- 13 =: Dichtrand

## Patentansprüche

1. Halter für in zahnärztlichen Instrumenten und/oder deren Komponenten (1) einsetzbare Leuchtmittel (4) die über Kontaktleitungen (9, 9a) an elektrische Zuleitungen (11, 11a) anschließbar sind, **dadurch gekennzeichnet, daß** die Kontaktleitungen (9, 9a) in einem Halter (5) aus elastischem Material eingebettet sind, wobei die einen Enden (10, 10a) der Kontaktleitungen (9, 9a) einen Steckanschluß für die Zuleitungen (11, 11a) bilden und die anderen Enden (12, 12a) der Kontaktleitungen (9, 9a) in einer Formausnehmung (8) des Halters (5) austreten, die zur Aufnahme des Leuchtmittels (5) ausgebildet ist, wobei die anderen Enden (12, 12a) der Kontaktleitungen (9, 9a) so beschaffen sind, dass sie die Kontaktierung mit dem Leuchtmittel herstellen.

2. Halter nach Patentanspruch 1, **dadurch gekennzeichnet, daß** der Halter (5) aus einem Elastomer, vorzugsweise aus einem Silikonmaterial, gebildet ist.

3. Halter nach Patentanspruch 2, **dadurch gekennzeichnet, daß** die Kontaktleitungen (9, 9a) im Spritzverfahren eingebracht sind.

4. Halter nach einem der Patentansprüche 1 bis 3, **dadurch gekennzeichnet, daß** die Kontaktleitungen (9, 9a), ausgehend vom Steckanschluss (10, 10a), im wesentliche in einer Ebene liegend in einem flachen Halterabschnitt (5a), und im Bereich der Formausnehmung (8) in einem demgegenüber abgebogenen Abschnitt (5b) eingebettet sind, wobei die abgebogenen Enden (12, 12a) die Kontaktierung für das Leuchtmittel (4) bilden.

5. Halter nach Anspruch 4, **dadurch gekennzeichnet, daß** die Kontaktleitungen (9, 9a) zumindest im flachen Halterabschnitt (5a) flach gedrückt angeordnet sind.

6. Halter nach einem der Ansprüche 1 bis 5, **dadurch gekennzeichnet, daß** die Kontaktstellen der Kontaktleitungen (9, 9a) zumindest im Bereich der Formausnehmung (8) vergoldet ausgeführt sind.

7. Halter nach einem der Ansprüche 1 bis 6, **dadurch gekennzeichnet, daß** er in seinen Außenkonturen so gestaltet ist, dass diese Dichtflächen zur Abdichtung gegenüber benachbarten Gehäuseteilen (6, 7) bilden.

8. Halter nach einem der Ansprüche 1 bis 7, **dadurch gekennzeichnet, daß** die Formausnehmung (8) des Halters (5) zur Aufnahme des Leuchtmittels (5) elastisch verformbar ist und insbesondere eine reibschlüssige Verbindung ausbildbar ist.

## Claims

1. A holder for illuminating means (4) which are adapted for use in dental instruments and/or components thereof (1) and which can be connected via contacting conductors (9, 9a) to electric leads (11, 11a), **characterized in that** said contacting conductors (9, 9a) are embedded in a holder (5) of resilient material, wherein one end (10, 10a) of each of the contacting conductors (9, 9a) forms a plug-in connector for one of said leads (11, 11a) and the other end (12, 12a) of each of the contacting conductors (9, 9a) emerges in a shaped recess (8) of said holder (5), which recess is shaped to accommodate said illuminating means (4), whilst said other ends (12, 12a) of said contacting conductors (9, 9a) are adapted so as to establish contact with said illuminating means (4).

2. A holder as defined in claim 1, **characterized in that** said holder (5) is composed of an elastomer, preferably a silicone compound.

3. A holder as defined in claim 2, **characterized in that** said contacting conductors (9, 9a) are introduced by injection molding.

4. A holder as defined in any one of claims 1 to 3, **characterized in that** said contacting conductors (9, 9a), as viewed starting from the plug-in connection (10, 10a), are embedded substantially in a single plane in a first flat portion of said holder (5a), and, in the region of said shaped recess (8), are embedded in a second portion (5b) which is at an angle to said flat portion, their bent ends (12, 12a) serving to establish contact with said illuminating means (4).

5. A holder as defined in claim 4, **characterized in that** said contacting conductors (9, 9a) are pressed down flat in at least said flat portion of said holder (5a).

6. A holder as defined in any one of claims 1 to 4, **characterized in that** the points of contact of said contacting conductors (9, 9a) are gold-plated at least in the region of said shaped recess (8).

7. A holder as defined in any one of claims 1 to 5, **characterized in that** its external contours are designed such that they form sealing faces producing a seal relative to adjacent housing parts (6, 7).

8. A holder as defined in any one of claims 1 to 6, **characterized in that** said shaped recess (8) of said holder (5) can be resiliently deformed for the accommodation of said illuminating means (4) so that, in particular, a frictional connection can be established.

## Revendications

1. Support pour moyens d'éclairage (4) qui peuvent être utilisés dans des instruments de dentisterie et/ou dans leurs composants (1) et qui peuvent être raccordés à des alimentations électriques (11, 11a) au moyen de conducteurs de contact (9, 9a), **caractérisé en ce que** les conducteurs de contact (9, 9a) sont incorporés dans un support (5) en matériau élastique, les extrémités (10, 10a) des conducteurs de contact (9, 9a) formant une fiche de raccordement pour les alimentations (11, 11a) et les autres extrémités (12, 12a) des conducteurs de contact (9, 9a) pénétrant dans un creux (8) ménagé dans le support (5) et configuré pour recevoir les moyens d'éclairage (4), les autres extrémités (12, 12a) des conducteurs de contact (9, 9a) étant constitués de manière à établir le contact avec les moyens d'éclairage.

2. Support selon la revendication 1, **caractérisé en ce que** le support (5) est réalisé en un élastomère et de préférence en silicone.

3. Support selon la revendication 2, **caractérisé en ce que** les conducteurs de contact (9, 9a) sont introduits par un procédé d'injection.

4. Support selon l'une des revendications 1 à 3, **caractérisé en ce que** les conducteurs de contact (9, 9a) qui partent de la fiche de raccordement (10, 10a) sont incorporés dans une partie plate de support (5a) qui se trouve essentiellement dans un plan et sont incorporées dans la région du creux (8) dans une partie (5b) par contre incurvée, les extrémités incurvées (12, 12a) formant le contact pour le moyen d'éclairage (4).

5. Support selon la revendication 4, **caractérisé en ce que** les conducteurs de contact (9, 9a) sont agencés en étant pressés à plat au moins dans la partie plate de support (5a).

6. Support selon l'une des revendications 1 à 4, **caractérisé en ce que** les emplacements de contact des conducteurs de contact (9, 9a) sont dorés au moins dans la région du creux (8).

7. Support selon l'une des revendications 1 à 5, **caractérisé en ce que** ses contours extérieurs sont configurés de manière à former des surfaces d'étanchéité destinée à assurer l'étanchéité par rapport aux parties voisines (6, 7) du boîtier.

8. Support selon l'une des revendications 1 à 6, **caractérisé en ce que** le creux (8) du support (5), destiné à recevoir le moyen d'éclairage (4) peut être déformé de manière élastique et **en ce qu'**une liaison par frottement peut en particulier être réalisée.
